# EUROPÄISCHE PATENTSCHRIFT

(11) **EP 2 641 176 B1**
(45) Veröffentlichungstag und Bekanntmachung des Hinweises auf die Patenterteilung: **07.01.2015**
(21) Anmeldenummer: 11785406.7
(22) Anmeldetag: 18.11.2011
(51) Int. Cl.: G06F 11/00, G06F 11/16, G06F 11/14

(54) **MIKROPROZESSORSYSTEM MIT FEHLERTOLERANTER ARCHITEKTUR**
MICROPROCESSORSYSTEM WITH FAULT TOLERANT ARCHITECTURE
SYSTÈME Ä MICROPROCESSEURS A ARCHITECTURE TOLÉRANTE AUX FAUTES

(30) Priorität: 19.11.2010 DE 102010044191; 17.11.2011 DE 102011086530
(43) Veröffentlichungstag der Anmeldung: 25.09.2013
(73) Patentinhaber: Continental Teves AG & Co. oHG, 60488 Frankfurt (DE)
(72) Erfinder: SCHADE, Kai, 64839 Münster (DE); ZIMMERSCHITT-HALBIG, Peter, 64846 Groß-Zimmern (DE); HEISE, Andreas, 64390 Erzhausen (DE)
(74) Vertreter: Brand, Markus
(86) Internationale Anmeldenummer: PCT/EP2011/070414
(87) Internationale Veröffentlichungsnummer: WO 2012/066108

(56) Entgegenhaltungen:
- WO-A1-2008/146091
- US-A- 5 551 047
- US-A1- 2010 262 971
- US-B1- 6 615 366

## Beschreibung

Die Erfindung betrifft ein Mikroprozessorsystem zur Ausführung von zumindest teilweise sicherheitskritischen Software-Modulen im Rahmen der Steuerung und/oder Regelung von den Software-Modulen zugeordneten Funktionen oder Aufgaben gemäß Oberbegriff des Patentanspruchs.

Im Stand der Technik sind eigensichere Mikrocontroller und Mikroprozessorsysteme für sicherheitsrelevante Kraftfahrzeugsteuergeräte bekannt.

Dabei wird der Begriff "eigensicher" als die Fähigkeit eines elektronischen Systems betrachtet, welches beim Auftreten bestimmter Fehler im sicheren Zustand bleibt oder unmittelbar in einen anderen sicheren Zustand übergeht oder bei Vorliegen eines Fehlers abzuschalten. Ein Unterfall der Eigensicherheit ist die Fault-Silent-Eigenschaft einer Komponente eines Systems, welches mit anderen Komponenten in Kommunikation steht und beim Erkennen eines Fehlers innerhalb der Komponente keine weiteren Informationen aussendet bzw. keine weiteren Aktionen selbst mehr ausführt.

Bekannte eigensichere Mikrocontroller umfassen zum Beispiel zwei Mikroprozessorkerne, die das gleiche Programm taktsynchron parallel abarbeiten (Lockstep-Modus, LSM) und bei Auftreten eines Fehlers abschalten. Andere bekannte Mikrocontroller umfassen drei oder mehrere Kerne und eine Majoritätseinheit, die bei einem Fehler entscheidet, welche der Prozessoren richtig gerechnet hat und die dann dem richtig rechnenden Prozessor die vorzunehmende Aufgabe überträgt (fault-tolerant-Prinzip), d. h. es ist die Eigenschaft bzw. Fähigkeit eines Systems auch mit einer begrenzten Zahl fehlerhafter Subsysteme oder Komponenten seine spezifizierte Funktion bzw. Aufgabe zu erfüllen.

Ferner sind auch bereits Mikrocontroller bekannt, die aus zwei Fault-Silent-Systemen mit jeweils zwei Kernen zu einem fehlertoleranten (fault-tolerant)-System zusammengesetzt sind.

Weiterhin sind Hardware-Strukturen bekannt, bei denen zwei getrennte Mikrocontrollereinheiten (MCUs) räumlich eng benachbart angeordnet sind, so dass diese schnell Daten miteinander austauschen können.

Heutige sicherheitsrelevante Systeme eines Kraftfahrzeugs, wie z.B. ein ESP-Regelsystem, in denen Fehlfunktionen der Elektronik sicher detektiert werden müssen, verwenden bei den entsprechenden Steuergeräten solcher Systeme üblicherweise Redundanzen zur Fehlererkennung, also bspw. eigensichere Mikroprozessor-Module bzw. Mikroprozessorplattformen mit zwei Mikroprozessorkernen (Dual-Core-Architektur), die im Lockstep-Modus verriegelt sind. Mit solchen Mikroprozessor-Modulen können ESP-Funktionen redundant berechnet und auf Übereinstimmung geprüft werden. Tritt eine Diskrepanz der Ergebnisse auf, so wird das ESP-System abgeschaltet.

Defekte in Hardware-Komponenten werden durch spezielle Absicherung erkannt, wie bspw. durch eine Checksummenberechnung vor Bustransfer oder mittels Checksummenspeicher bei Flash-Speichern. Zudem ist es auch bekannt, auf der Basis von redundanten Komponenten, wie Speichermodule (z.B. RAM, ROM, Cache), CPU's, Überwachungsmodule bzw. Buskomparatoren oder Memoryprotection-Units Eigensicherheit zu erreichen.

Mit solchen Architekturen können jedoch "Defekte" oder "konzeptionelle Fehler" einer Software nicht erkannt werden.

Solche Defekte können z. Bsp. im Rahmen eines Freigabeprozesses der Software nicht erkannte Übersetzungsfehler von Compiler oder Assembler sein, welche nur unter speziellen Rahmenbedingungen eintreten und offensichtlich werden.

Bekannte Lösungen zur Absicherung von Softwarekomponenten hinsichtlich solcher Defekte bestehen darin, einen anderen Assembler/Compiler bzw. eine geänderte Assembler-/Compiler-Vorgabe zu treffen, so z. Bsp. Speed-optimiert statt Memoryoptimiert oder verschiedene Optimier-Level.

Konzeptionelle Fehler einer Software beruhen bspw. auf "Denkfehler" der Entwickler und führen beim Ablauf der Software unter speziellen Umständen zu unspezifiziertem Verhalten bzw. in einen falschen Betriebs-Modus des Systems, d. h. es liegt eine ungenügende Abbildung der zu erwartenden äußeren Umstände bzw. Betriebssituationen auf die Struktur der Software bzw. Betriebsmodi vor.

Zur Absicherung von Softwarekomponenten gegenüber solchen konzeptionellen Fehlern ist es bekannt, die Funktion von einer zweiten, dritten, ... n-ten Softwarekomponente ausführen zu lassen und jeweils die Ergebnisse mit den (n-1) anderen Softwarekomponenten zu vergleichen und zu bewerten.

In der WO 2008/146091 A1 wird ein Datenverarbeitungssystem mit zwei CPU's und Peripheriekomponenten zur Bildung von zwei Datenverarbeitungsmodulen beschrieben, wobei die beiden CPU's mit den jeweils zugeordneten Peripheriekomponenten, bzw. die von diesen gebildeten Datenverarbeitungsmodule, in einem zueinander synchronisierten Betriebsmodus oder in einem nicht-synchronisierten Betriebsmodus arbeiten können. In dem synchronisierten Betriebsmodus kann das Datenverarbeitungssystem dabei redundante Software und in dem nicht-synchronisierten Betriebsmodus beispielsweise redundant diversitäre Software ausführen. Weiterhin beschrieben ist, dass mehrere solcher Datenverarbeitungssysteme an gleichen Datenverbindungen vorgesehen sein können.

Dieser bekannte Fehlererkennungsansatz zur Erkennung von konzeptionellen Fehlern weist folgende Nachteile auf:
- Die n-ten Softwarekomponenten bedingen eine nahezu n-fache Laufzeit zur Berechnung in einer einzigen Laufzeitumgebung auf einem einzigen eigensicheren Mikroprozessor-Modul,
- Bei einem Versagen der zugrundeliegenden einfach redundanten Hardware wird die gesamte Software abgeschaltet; dies führt hinsichtlich Robustheit und Verfügbarkeit des gesamten eingebetteten Systems zu einem schlechten Resultat,

- Über Sicherheitsstufe ASIL-D hinausgehend werden Hardware-Zweifachfehler von den auf die Erkennung von Einfachfehlern getrimmten Hardware-Überwachungsmodulen nicht garantiert erkannt und können zu unklaren Sachverhalten führen, die es programmiertechnisch nicht gestatten, konzeptionelle Fehler der Softwarekomponenten von Hardwaredefekten eineindeutig zu unterscheiden. So werden z.B. Zweifachfehler in Flash-oder RAM-Speichern sowie in Mikroprozessoren auf der Hardwareebene nicht erkannt, führen zu einer Verfälschung eines Inputs, eines Algorithmus oder eines Outputs einer oder mehrerer Softwarekomponenten mit der Folge einer Abschaltung der beeinflussten Softwarekomponenten, ohne dass die genaue Ursache gedeutet werden könnte. Eine nachgelagerte Offline-Analyse würde sich schwierig, langwierig und kostspielig gestalten,
- Eine sequentielle Ausführung der n-fachen Softwarekomponenten (Serialisierung) führt erfahrungsgemäß mittelfristig zu Softwarestrukturen, die prinzipbedingt nicht mehr trennbar sind. Wenige monolithische Blöcke entstehen, die in einem abgegrenzten Kontext betrachtet, entwickelt und gepflegt werden. Die FSM-technische Betrachtung eines solchen Gesamtsystems gestaltet sich fortwährend schwieriger und die Einführung eines mehrstufigen Rückfallebenenkonzeptes ist, aufgrund der nicht mehr klar gegebenen Grenzen der Softwarekomponenten, sehr aufwändig,
- Schließlich geht die Handhabbarkeit, Pflege und Wartung der Softwarekomponenten selbst aufgrund der monolithischen Struktur verloren.

Zur Beurteilung der Zuverlässigkeit von Sicherheitsfunktionen für Software- und Hardwarekomponenten von Automotive-Systemen definiert die Norm ISO 26262 so genannte Sicherheitsstufen, abgekürzt ASIL (Automotive Safety Level). Die jeweilige Sicherheitsstufe stellt ein Maß für die funktionale Sicherheit des Systems in Abhängigkeit von dem Risiko und der Gefährdung von Personen dar, die von der Systemfunktion ausgehen können. Funktionen oder Prozesse mit einer geringeren Gefährdung werden prinzipiell durch einen Sicherheitskreis mit einem geringeren Sicherheitsintegritätslevel aufgebaut als Prozesse mit höherer Gefährdung. Gemäß dieser Norm gibt es vier Sicherheitsstufen ASIL-A bis ASIL-D, wobei ASIL-D die höchste Sicherheitsanforderung darstellt. Ein Softwareversagen aufgrund von konzeptionellen Fehlern entspricht dabei der ASIL-D Sicherheitsstufe.

Der Erfindung liegt die Aufgabe zugrunde, ein eingangs genanntes Mikroprozessorsystem anzugeben, welches eine Eigensicherheit nach ASIL-D Klassifizierung auf Hardware- und Software-Ebene gewährleistet und zusätzlich flexibel in Handhabung und Wartung der Softwarekomponenten ist sowie über ein mehrstufiges Rückfallebenenkonzept verfügt.

Diese Aufgabe wird gelöst mit den Merkmalen des Patenanspruch 1.

Ein solches Mikroprozessorsystem zur Ausführung von zumindest teilweise sicherheitskritischen Software-Modulen im Rahmen der Steuerung und/oder Regelung von den Software-Modulen zugeordneten Funktionen oder Aufgaben, welches wenigstens ein eigensicheres Mikroprozessor-Modul mit wenigstens zwei Mikroprozessorkernen umfasst und
- wenigstens ein weiteres eigensicheres Mikroprozessor-Modul mit wenigstens zwei Mikroprozessorkernen vorgesehen ist, wobei die wenigstens beiden Mikroprozessor-Module über ein Bus-System verbunden sind,
- wenigstens zwei Software-Module vorgesehen sind, welche wenigstens teilweise überlappende Funktionen ausführen, zeichnet sich erfindungsgemäß dadurch aus, dass
- diese Software-Module mit wenigstens teilweise überlappenden Funktionen auf den wenigstens zwei Mikroprozessor-Modulen verteilt sind, und
- Zur Erkennung von Software- und/oder Hardware-Fehlern Mittel zum Vergleichen und/oder Arbitrieren der mit den Software-Modulen für die identischen Funktionen erzeugten Ergebnisse vorgesehen sind.

Mit einem solchen erfindungsgemäßen Mikroprozessorsystem lassen sich eigensichere Mikroprozessor-Module in der Art integrieren, dass im Fehlerfall die entsprechende Hardware-Komponente oder die Software-Komponente eineindeutig identifiziert und fallabhängig abgeschaltet werden kann.

Dies wird durch die Eigenschaft der Eigensicherheit der Mikroprozessor-Module gesichert, so dass bei einem Hardware-Fehler ein anderes Mikroprozessor-Modul aktiviert wird oder weiterlaufen gelassen wird und dort ein die gleiche oder identische oder ähnliche oder gleichartig aber weniger umfassende Funktion ausführendes Software-Modul gestartet wird. Auch kann vorgenanntes Software-Modul schon in einer Art Standby Betrieb laufend sein, jedoch noch die Freigabe zum Durchgriff auf z.B. die letztendliche Steuerung eines Aktuators oder der Kommunikation auf einem Busmedium noch bedürfen bevor es effektiv die Kontrolle oder die Freigabe zur Ausführung aktiver Handlungen bekommt. Diese Freigabe kann beispielsweise wie folgt geschehen, nämlich explizit durch einen Arbitrierer in Form eines überwachenden Software-Moduls, oder explizit durch Selbstanzeige des primär zuständige Softwaremoduls mit Meldung, dass es aufgrund Fehler abschaltet oder abgeschaltet wurde, oder implizit durch Ausbleiben von Alive-Signalen des Mikroprozessor-Moduls auf welcher das primär zuständige Softwaremodul ausgeführt wird. Durch die wenigstens teilweise redundanten Software-Module kann im Fehlerfall eines dieser Software-Modul dasjenige mit der verwandten Funktion ausgeführt werden, welches auf dem gleichen oder einem anderen Mikroprozessor-Modul allokiert ist.

Insbesondere kann erkannt werden, ob ein Versagen eines eigensicheren Mikroprozessor-Moduls oder eines Software-Moduls vorliegt, wobei auch dann ein Software-Modul als fehlerhaft erkannt werden kann, wenn gleichzeitig die Funktionstüchtigkeit desjenigen Mikroprozessor-Modul, auf welchem dieses Software-Modul lokalisiert ist, sichergestellt ist.

Schließlich kann mit dem erfindungsgemäßen Mikroprozessorsystem eine Hardware/Software-Architektur geschaffen werden, die eine Verteilung von Softwarekomponenten, wie bspw. ABS- oder ESP-Funktionen oder Programmmodule oder Tasks auf verschiedenen eigensicheren Mikroprozessor-Modulen erlaubt, wobei zum Beispiel auch zwei sich überwachende ESP-Software-module (die zur Erfüllung von vorgegebenen ASIL-Sicherheitsstufen nicht notwendigerweise identisch programmiert sein müssen, bzw. gemessen an der ursprünglichen funktionalen Spezifikation den grundlegend gleichen Entwicklungsvorgaben genügen aber andersartig umgesetzt sein sollen bzw. gar müssen) notfalls auf einem eigensicheren Mikroprozessor-Modul parallel laufen können.

In einer vorteilhaften Ausgestaltung der Erfindung, ist es vorgesehen, bei Erkennung eines Fehler behafteten Software-Moduls dessen Funktion zur Fehlerbehebung von einem weiteren Software-Modul ausführen zu lassen, welches diese Funktion wenigstens als mit dem Fehler behafteten Software-Modul überlappende Funktion aufweist oder welches hinsichtlich der auszuführenden Funktionen oder Aufgaben identisch ist, also dem gleichen Zweck dient.

Damit wird durch ein solches Mikroprozessorsystem eine Sicherheitsarchitektur mit erhöhter Robustheit zur Verfügung gestellt, da bei Versagen eines Software-Moduls andere Software-Module aktiv bleiben. Insbesondere können Teilfunktionen oder Teilaufgaben des versagenden Software-Moduls als Backup-Routinen oder Programmsegmente auf einem anderen Software-Modul auf demselben oder einem anderen Mikroprozessor-Modul gestartet werden, die nicht mit dem versagenden Software-Modul identisch sind, jedoch auch diese Teilfunktion oder Teilaufgabe durchführen können.

Ferner ist es besonders vorteilhaft, wenn gemäß einer Weiterbildung der Erfindung bei Erkennung eines Fehler behafteten Mikroprozessor-Moduls zur Fehlerbehebung ein weiteres Mikroprozessor-Modul die Durchführung der Funktion des Fehler behafteten Mikroprozessor-Moduls übernimmt, auf welchem das zur Durchführung dieser Funktion erforderliche Software-Modul lokalisiert ist. Damit wird eine Sicherheitsarchitektur mit weiter erhöhter Robustheit geschaffen, da bei einem Versagen eines Mikroprozessor-Moduls andere Mikroprozessor-Module aktiv bleiben, Software-Module im Fehlerfall teilweise oder vollständig weiter ausgeführt werden sowie auch hier Teilfunktionen oder Teilaufgaben als Backup-Routinen oder Programmsegmente in einem anderen Software-Modul auf einem anderen Mikroprozessor-Modul mit der Kontrolle beauftragt werden können.

Dabei ist es weiterbildungsgemäß besonders vorteilhaft, dass zur Ausführung einer sicherheitsrelevanten Funktion mehrfach auf einem oder mehreren Mikroprozessor-Modulen verteilte Software-Module mit im Wesentlichen redundanter Software vorgesehen sind.

Die dadurch erhöhte Verfügbarkeit äußert sich in der Fehlertoleranz des erfindungsgemäßen Mikroprozessorsystems gegenüber dem Versagen eines Software-Moduls darin, dass ein identisches oder teilidentisches Software-Modul zur Fehlerbehandlung ausführbar ist.

Weiterhin wird die funktionale Sicherheit des Mikroprozessorsystem erhöht, wenn gemäß einer Weiterbildung der Erfindung zur Ausführung einer sicherheitsrelevanten Funktion mehrfach auf einem oder mehreren Mikroprozessor-Modulen verteilte Software-Module mit diversitär redundanter Software vorgesehen sind. Damit wird sowohl eine Absicherung auf Hardware-Ebene durch die Eigensicherheit der Mikroprozessor-Module als auch eine Absicherung auf Software-Ebene durch die Redundanz diese Software-Module mit der diversitär redundanten Software gewährleistet.

Des Weiteren ist es besonders vorteilhaft, wenn nach einer Ausgestaltung der Erfindung jedes Mikroprozessor-Modul zur Durchführung von Grundfunktionen Software-Grundmodule, vorzugsweise Kommunikation-Software-Module, Eingangsplausibilisierungs-Software-Module und aufgabenspezifische Software-Module, welche jeweils einmal auf dem Mikroprozessor-Modul lokalisiert sind, aufweist.

Damit können auf dem erfindungsgemäßen Mikroprozessorsystem mit mehreren Mikroprozessor-Modulen neben sicherheitskritischer Software, wie zum Beispiel Bremsenregelungssoftware (ABS/ASR/EBV) oder Fahrdynamikregelungssoftware (ESP/ESC) auch nicht sicherheitskritische Software, zum Beispiel Software für Navigationssysteme oder nicht hochgradig sicherheitskritische Systeme wie Abstandsregelsysteme (ACC) oder sonstige Software für nicht sicherheitskritische Fahrerassistenzsysteme oder Komfortfunktionen parallel zur sicherheitskritischen Software ausgeführt werden. Da die Mikroprozessor-Module mit einer eigensicheren Multiprozessorstruktur aufgebaut sind, kann dies der Robustheit und möglichst geringen Wechselwirkungen wegen in verschiedenen Laufzeitumgebungen (RTEs, Run-Time Environments) realisiert werden.

Vorzugsweise können die Mikroprozessor-Module als ASIC realisiert werden, so dass gewährleistet ist, dass die verschiedenen Mikroprozessormodule nicht nur bezüglich Ihrer IC-Gehäuse räumlich kurz angebunden sind, was nach wie vor für die Einbringung in Leiterplatten bzw. Kabelbäume taugliche Bussysteme erforderlich ist, welche schnell aber nicht schnellst sind, sondern auch auf Ebene des DIE bzw. dem Silizium gemeinsame Strukturen oder Busse für eine möglichst optimale Datenübertragungsgeschwindigkeit nutzbar werden, so dass kurze Entfernungen für eine schnelle Datenübertragung sorgen, schnelle Bus-Systeme vorgesehen werden können und nur geringe Latenzen auftreten.

Ein weiterer Vorteil besteht darin, dass Software-Module unterschiedlicher Herkunft (bspw. OEM-spezifische Anwendungen und Eigenentwicklungen) auf dem Mikroprozessorsystem entkoppelt werden können, da sowohl das eine Software-Modul auf einem eigensicheren Mikroprozessor-Modul und das andere Software-Modul auf einem anderen eigensicheren Mikroprozessor-Modul lokalisiert werden können. Insbesondere kann damit auch sicherheitsrelevante von nicht sicherheitsrelevanter Software entkoppelt werden.

Vorzugsweise ist als Software-Grundmodul weiterbildungsgemäß ein Ausgangsarbitrierungs-Software-Modul vorgesehen, welches eine Arbitrierung und vorteilhafterweise auch eine Plausibilisierungsprüfung der Ergebnisse der eine sicherheitsrelevante Funktion durchführenden redundanten und/oder diversitär redundanten Software-Module durchführt. Dies ermöglicht eine eineindeutige Fehlerzuordnung, ob also ein Versagen eines Mikroprozessor-Moduls oder ein Versagen eines Software-Moduls vorliegt. Denn in Verbindung mit den eigensicheren Mikroprozessor-Modulen können im Falle eines negativen Vergleichs der Ergebnisse redundanter Software-Module bei gleichzeitiger Sicherstellung der Funktionstüchtigkeit der Mikroprozessor-Module die Software-Module als fehlerhaft erkannt werden. Der Vorteil besteht also darin, dass nicht nur Hardware-Fehler entdeckt werden können, sondern durch die parallele Abarbeitung von Software auch konzeptionelle Software-Fehler entdeckt werden können.

Besonders vorteilhaft ist es gemäß einer Weiterbildung der Erfindung, wenn wenigstens ein Mikroprozessor-Modul als Multiprozessorplattform hinsichtlich seiner Mikroprozessorkerne in einem Lockstep-Modus (LSM) arbeitet, wodurch eine Absicherung weitestgehend aufgrund von räumlicher Redundanz, also duplizierten Strukturen erreicht wird. Ein solches Mikroprozessor-Modul arbeitet grundsätzlich in diesem LSM-Modus, kann aber auch nach dem Einschalten der Versorgungspannung auf eine Initialisierungsroutine folgend oder nach einem externen Reset-Signal oder zur Laufzeit als einmaligen Vorgang in diesen LSM-Modus versetzt werden, in dem dieses Mikroprozessor-Modul auch verbleibt.

Desweiteren kann weiterbildungsgemäß wenigstens ein Mikroprozessor-Modul als Multiprozessorplattform hinsichtlich seiner Mikroprozessorkerne in einem Decoupled-Parallel-Modus (DPM) arbeiten, nämlich seine funktionalen Sicherheitsziele über die architektonische Maßnahme der asymmetrischen Redundanz erreicht. Dadurch wird die Absicherung durch einen zeitlich integralen Abgleich erreicht, die auf asymmetrisch ausgeführter räumlicher Redundanz der Komponenten basiert.

Das erfindungsgemäße Mikroprozessorsystem kann nach einer Ausgestaltung der Erfindung neben mehreren Mikroprozessor-Modulen als Multikernprozessorplattformen wenigstens ein Mikroprozessor-Modul mit einem einzigen Mikroprozessorkern (Single Core Prozessor) aufweisen. Vorzugsweise sind dabei diese Mikroprozessor-Module mit wenigstens einem Bus-System mit einer Input/Output-Schnittstelle verbunden, um eine externe Erweiterbarkeit zu ermöglichen.

Ferner kann das erfindungsgemäße Mikroprozessorsystem gemäß einer Weiterbildung der Erfindung mit Mikroprozessor-Modulen ausgebildet werden, welche jeweils gleichartige Betriebssysteme aufweisen. Damit ist es vorzugsweise möglich, hierfür ein Betriebssystem zu verwenden, welches die Rechenlast statisch, teildynamisch oder volldynamisch auf die verschiedenen Mikroprozessor-Module verteilt.

In einer Ausgestaltung der Erfindung sind ein Teil der Mikroprozessor-Module jeweils mit einem zeitscheibenbasierten Betriebssystem ausgerüstet, welche synchronisiert werden. Dadurch sind die Mikroprozessor-Module phasenstarr miteinander gekoppelt. Dies kann bspw. durch eine zeitäquidistante Versendung von Zeitmarken durch einen Sender über externe oder Onchip-Bus-Systeme im Zusammenwirken mit einer vorteilhaften Justage der Zeitscheibe auf Seiten des Empfängers erreicht werden.

Schließlich ist es erfindungsgemäß vorgesehen, die Mikroprozessor-Module wenigstens teilweise als ASIC mit einem gemeinsamen Gehäuse auszubilden.

Das erfindungsgemäße Mikroprozessorsystem ist in vorteilhafter Weise für die Anwendung in einem elektronischen Fahrzeugsteuergerät, welches vorzugsweise für die Bremsensteuerung und -regelung vorgesehen ist, geeignet, wobei der Eigenschaften nach typischerweise jedoch auch prädestiniert, um Software-Module zu beherbergen, welche das fahrdynamische Verhalten der, oder einer ausgewählten Gruppe von Chassis-Steuergeräten koordinieren. Die Koordination kann in diesem Fall Eingriffe im Sinne von systemweiten Betriebsmodusumschaltungen der Arbeitspunkte der Steuergeräte der Chassisdomäne oder aber auch einstufigen oder mehrstufigen oder kaskadierten oder eingebetteten Regelschleifen umfassen.

Die Erfindung wird nachfolgend anhand von Ausführungsbeispielen unter Bezugnahme auf die beigefügten Figuren ausführlich beschrieben. Es zeigen:
- Figur 1: ein schematisches Blockschaltbild eines Mikroprozessorsystems mit eigensicheren Mikroprozessor-Modulen als Grundelemente gemäß der Erfindung,
- Figur 2: ein schematisches Blockschaltbild eines eigensicheren Mikroprozessor-Moduls des Mikroprozessorsystems nach Figur 1,
- Figur 3: ein schematisches Blockschaltbild eines weiteren eigensicheren Mikroprozessor-Moduls des Mikroprozessorsystems nach Figur 1, und
- Figur 4: eine schematische Darstellung einer Aufteilung von verschiedenen Software-Modulen auf zwei Mikroprozessor-Module eines Mikroprozessorsystems gemäß Figur 1.

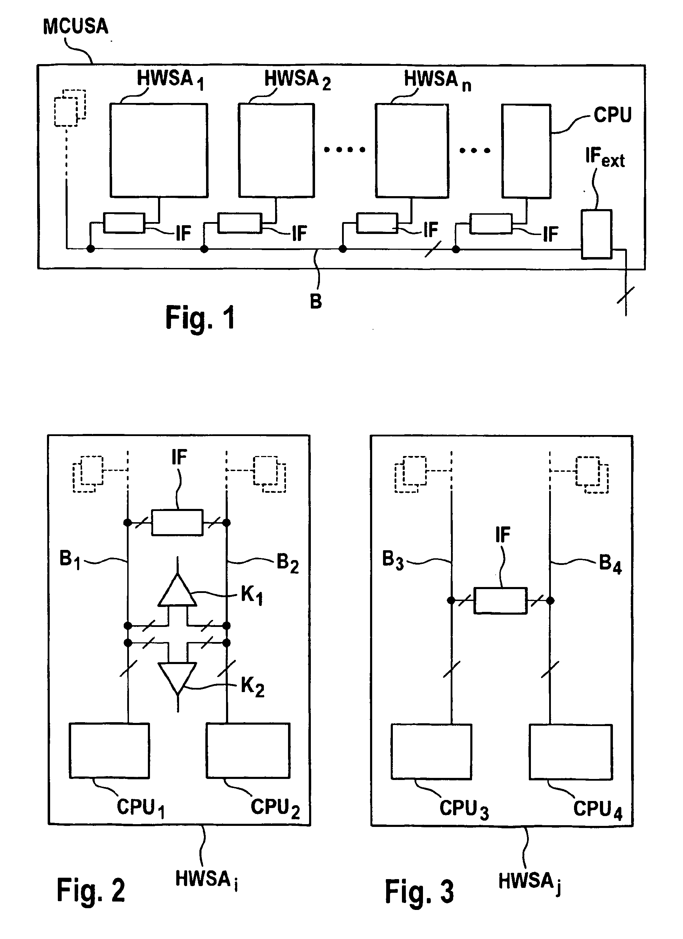

Ein Mikroprozessorsystem MCUSA gemäß Figur 1 besteht aus mehreren duplizierten Grundelementen, die als eigensichere Mikroprozessor-Module HWSAᵢ (i=1, ... i=n), auch CPU-Module genannt, wenigstens zwei Mikroprozessorkerne CPU₁ und CPU₂ bzw. CPU₃ und CPU₄ aufweisen, wie aus den Figuren 2 und 3 ersichtlich ist. Ferner kann dieses Mikroprozessorsystem MCUSA wenigstens einen Mikroprozessor CPU umfassen, der als Standard-Mikroprozessor (also nicht eigensicher ist) nur einen Kern (Single Core Prozessor) aufweist. Jedes dieser Mikroprozessor-Module HWSAᵢ (i=1, ... i=n) als auch der Standard-Mikroprozessor CPU sind über eine Schnittstelle IF mit einem zentralen Bus-System oder Netzwerk B verbunden, wobei über eine Schnittstelle IFₑₓₜ eine Erweiterung durch Anschluss weiterer Komponenten, bspw. Hardware-Module möglich ist. Es ist auch möglich die Mikroprozessor-Module HWSAᵢ (i=1, ... i=n) und ggf. auch den Standard-Mikroprozessor CPU vollständig oder teilweise miteinander über mehrere, ggf. autarke Bus-systeme zu vernetzten.

Das eigensichere Mikroprozessor-Modul HWSAᵢ als Dual-Core-Mikroprozessor gemäß Figur 2 arbeitet im sogenannten LSM(Lockstep)-Modus, d. h. solche Mikroprozessoren führen redundant und taktsynchron (daher Lockstep-Modus) das gleiche Programmsegment aus, die Ergebnisse der beiden Mikroprozessorkerne CPU₁ und CPU₂ werden verglichen und ein Fehler wird dann bei dem Vergleich auf Übereinstimmung erkannt.

Jeder Mikroprozessorkern CPU₁ und CPU₂ des Mikroprozessor-Moduls HWSAᵢ gemäß Figur 2 weist ein eigenes Bus-System B₁ bzw. B₂ auf, die über eine Schnittstelle IF verbunden sind. Zur Durchführung des Vergleichs der Ergebnisse sind, vorteilhafterweise redundante Komparatoren K₁ und K₂ vorgesehen, welche zur Erkennung von Einfachfehlern von Hardwaredefekten alle Ein- und Ausgänge der redundanten Grundelemente dieses Mikroprozessor-Moduls HWSAᵢ überwachen, sowie die in Figur 2 beispielhaft dargestellten beiden Mikroprozessorkerne CPU₁ und CPU₂ im Fehlerfall, also bei einer Diskrepanz zwischen den beiden Mikroprozessorkerne CPU₁ und CPU₂ ein Abschalten dieses Mikroprozessor-Moduls HWSAᵢ oder dessen Degradierung bewirkt. Die Absicherung wird durch eine weitgehende symmetrische räumliche Redundanz erreicht, d. h. Strukturen werden dupliziert. Neben den dargestellten Mikroprozessorkernen CPU₁ und CPU₂ umfasst dieses Mikroprozessor-Modul HWSAᵢ weitere Komponenten, wie Arbeitsspeicher (RAM), Programmspeicher (Flash oder ROM) Vergleicher und Sicherheitsmodule, Module für externe Busse (CAN, LIN, Flexray, MOST, ISOK, Ethernet), wobei solche Komponenten aus Sicherheitsgründen auch redundant ausgeführt sein können. Auch können solche Komponenten neben der räumlichen Redundanz im Sinne einer wesentlichen Duplizierung der Strukturen sowie neben dem Fall der einfachen Ausführung ganz ohne vollständige Duplizierung auch über eine asymmetrische Redundanz verfügen. Beispielsweise sei genannt, dass ein Flash bzw. ROM Speicher durch zusätzliche Speicherkapazitäten erweitert sein kann, welche dem Zwecke der Beherbergung von Checksummen dienen. Diese zusätzlichen Elemente im Sinne von Speicherbits für nichtfunktionale, sondern sicherheitsgerichtete Zwecke ist formal vergleichbar mit einer teilweise redundanten Ausführungsform, welche ob ihrer Unvollständigkeit nach nicht nach dem Prinzip der räumlichen Redundanz, dem vorgenannten Lockstep-Modus LSM arbeiten kann, sondern nach den Prinzipien asymmetrisch abgesicherter Strukturen, zeitlich integral, arbeiten muss.

Das eigensichere Mikroprozessor-Modul HWSAⱼ als Dual-Core-Mikroprozessor mit zwei Mikroprozessorkernen CPU₃ und CPU₄ gemäß Figur 3 arbeitet im sogenannten DPM(Decoupled Parallel)-Modus, d. h. sie können unabhängig voneinander verschieden Programmsequenzen abarbeiten. Jeder Mikroprozessorkern CPU₃ und CPU₄ weist einen eigenen Bus B₃ bzw. B₄ auf, die über eine Schnittstelle IF verbunden sind. Neben diesen beiden Kernen CPU₃ und CPU₄ sind auch weitere Komponenten, wie Arbeitsspeicher (RAM), Programmspeicher (Flash oder ROM) Vergleicher und Sicherheitsmodule, Module für externe Busse (CAN, LIN, Flexray, MOST, ISOK, Ethernet) vorhanden. Eine Absicherung wird durch einen zeitlich integralen Abgleich erreicht und sowohl auf symmetrisch wie auch asymmetrisch ausgeführter räumlicher Redundanz der Komponenten basieren kann.

Das Mikroprozessorsystem MCUSA gemäß Figur 1 besteht damit aus einer Parallelstruktur von mehreren eigensicheren Grundelementen, nämlich den Mikroprozessor-Modulen HWSAᵢ (i=1, ... i=n) und stellt eine Mikroprozessor-Sicherheits-Architektur dar, wobei diese Struktur als ASIC oder zumindest mit wenigen ASIC's in einem einzigen Gehäuse hergestellt werden kann.

Dieses Mikroprozessorsystem MCUSA gemäß Figur 1 stellt nicht nur eine Hardware-Systemarchitektur dar, welche eine Eigensicherheit gemäß der ASL-D Klassifizierung sicherstellt, sondern sichert auch auf der Software-Ebene eine Eigensicherheit gemäß dieser Sicherheitsstufe ASIL-D, wie im Folgenden erläutert werden soll.

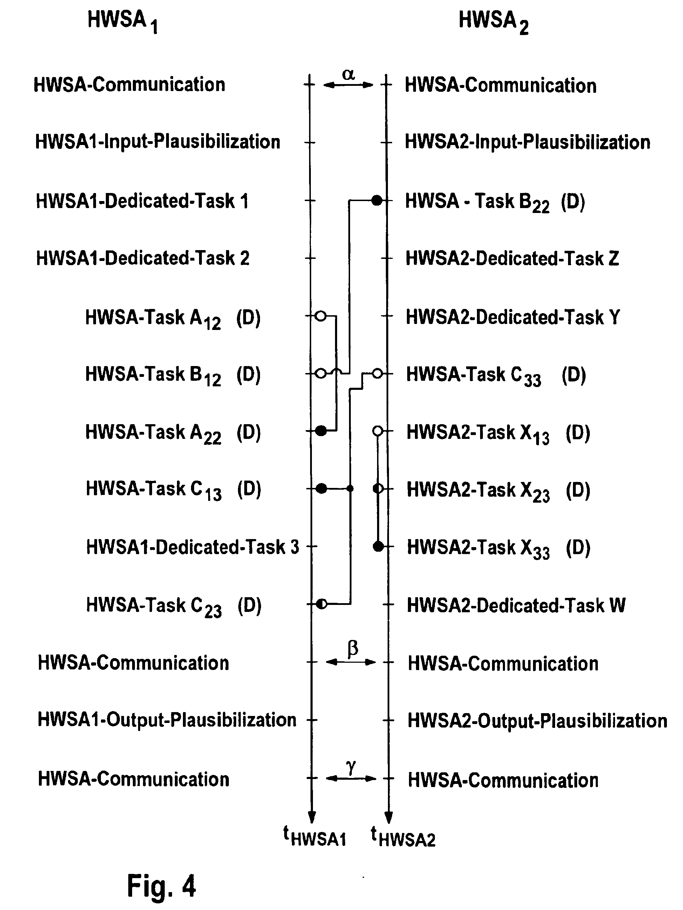

Hierzu zeigt Figur 4 beispielhaft die statische Allokierung bzw. Verteilung verschiedener Software-Module auf zwei eigensicheren Mikroprozessor-Module HWSA₁ und HWSA₂ eines Mikroprozessorsystem MCUSA, wie bspw. gemäß Figur 1. Dabei können diese beiden Mikroprozessor-Module HWSA₁ und HWSA₂ entsprechend Figur 2 oder Figur 3 aufgebaut sein. Die aufgeführten Software-Module in dem jeweiligen Mikroprozessor-Modul HWSA₁ und HWSA₂ werden entsprechend den Zeitachsen bzw. Zeitbasen t_{HWSA1} und t_{HWSA2} einer bspw. zugehörigen Laufzeitumgebung sequentiell abgearbeitet, beginnend und endend jeweils mit einem Software-Grundmodul "HWSA-Communication". Dabei sind diejenigen Software-Module mit (D) gekennzeichnet, die der Sicherheitsstufe ASIL-D entsprechen, also Software mit einem hohen Sicherheitslevel zum Beispiel für sicherheitskritische Anwendungen, wie ABS- oder ESP-Funktionen, wie sie in speziellen Ausführungsformen vorkommen.

Hinsichtlich der Software-Module auf den beiden Mikroprozessor-Modulen HWSA₁ und HWSA₂ wird einerseits unterschieden zwischen sogenannten Software-Grundmodulen, die auf jedem der beiden Mikroprozessor-Module HWSA₁ und HWSA₂ vorgesehen sind und jeweils nur einmal ausgeführt werden und andererseits Software-Modulen, die mehrfach redundant statisch auf einem Mikroprozessor-Modul, also bspw. HWSA₁ oder HWSA₂ oder mehreren Mikroprozessor-Modulen, also bspw. HWSA₁ und HWSA₂ allokiert und ausgeführt werden. Dabei können auch einige der Software-Module überlappende Aufgaben haben.

Bei diesen Software-Grundmodulen handelt es sich um Kommunikation-Software-Module, Eingangsplausibilisierungs-Software-Module und aufgabenspezifische Software-Module.

Das bereits erwähnte Software-Grundmodul "HWSA-Communication" erlaubt einen Austausch von Daten, entweder uni- oder bidirektional über ein Bussystem oder ein Netzwerk B des Mikroprozessorsystem MCUSA (vgl. Figur 1). Dies soll Eingangsgrößen für die Regelfunktionen, laufzeitrelevante Daten (Zähler, Statusinformationen, Systemzeiten, etc.) und Ausgangsgrößen/Ergebnisse der Regelfunktionen umfassen.

Das Eingangsplausibilisierungs-Software-Module "HWSA1-Input-Plausibilization" bzw. "HWSA2-Input-Plausibilization" dienen dazu, die zuvor per Kommunikation, also mittels der Software-Grundmodule "HWSA-Communication" erhaltenen Eingangsgrößen zu plausibilisieren, um als qualifizierte Werte an die Regelfunktionen weitergegeben werden zu können, da nur Ergebnisse von Regelfunktionen, die auf qualifizierten Eingangsgrößen beruhen können, nach Fertigstellung der Berechnung auch sinnvoll vergleichbar sind.

Zusätzlich zur in den Eingangsplausibilisierungs-Software-Modulen ausgeführten Prüfung der Kommunikationsdaten kann eine sogenannte End-To-End Absicherung, auch E2E genannt, angewandt werden, welche dem Funktionsprinzip nach bereits in der das Kommunikationsdatum erzeugenden Regelfunktion eine eineindeutige Absicherungs-Prüfsumme dem Datum hinzufügt sowie diese mit dem Datum als atomische Einheit gleichzeitig und gemeinsam versendet. Diese Absicherungs-Prüfsumme wird von der das Datum empfangenden bzw. allen das Datum empfangenden Regelfunktionen aufgrund bekanntem Berechnungsschlüssel der E2E Prüfsumme zur Gegenprüfung auf korrekte Übertragung des Datums herangezogen und damit sogar Mittel zur Verfügung stellt, eine aufgrund eines konzeptionellen Fehlers im Ausgangs-Plausibilisierungs-Software-Modul auf Seite des Senders als auch im Eingangs-Plausibilisierungs-Software-Modul auf Seite des Empfängers erfolgte Verfälschung erkennen und hierauf entsprechend reagieren zu können.

Die aufgabenspezifischen (dedicated task) Software-Grundmodule des Mikroprozessor-Moduls HWSA₁ bzw. Mikroprozessor-Moduls HWSA₂ werden gemäß Figur 4 als "HWSA1-Dedicated-Task 1", "HWSA1-Dedicated-Task 2" und "HWSA1-Dedicated-Task 3" bzw. "HWSA2-Dedicated-Task Y", "HWSA2-Dedicated-Task Z" und "HWSA2-Dedicated-Task W" bezeichnet. Auch diese Software-Grundmodule werden einfach ausgeführt, ohne weiterführende Anforderungen an Diversität und erhöhter Robustheit oder ohne Redundanz genügen zu müssen. Diese aufgabenspezifischen Software-Grundmodule existieren im Wesentlichen nur ein Mal und werden auf dem Mikroprozessor-Modul HWSA₁ bzw. HWSA₂ "dediziert" ausgeführt.

Ferner sind als Software-Module auch Ausgangsarbitrierungs-Software-Module vorgesehen, bezeichnet als "HWSA1-Output-Plausibilization" bzw. "HWSA2-Output-Plausibilization", die zur Plausibilisierung der zuvor von der Gesamtheit aller Regelfunktionen bestimmten Ausgangswerte bzw. Stellgrößen dienen. Dabei wird zwischen der funktional notwendigen Plausibilisierung und der aus funktionaler Sicherheit notwendigen Plausibilisierung unterschieden. Diese unterschiedlichen Plausibilisierungen werden weiter unten beschrieben.

Weiterhin gibt es Software-Module, die auf einem Mikroprozessor-Modul mehrfach und/oder auf mehreren Mikroprozessor-Modulen verteilt lokalisiert sind und gemäß Figur 4 mit "HWSA-Task Aᵢⱼ", "HWSA-Task Bᵢⱼ", "HWSA-Task Cᵢⱼ" und "HWSA-Task Xᵢⱼ" bezeichnet. Diese redundanten Software-Module sind mit der gleichen Aufgabe betraut, d.h. dienen weitestgehend dem gleichen Zweck.

Für das Mikroprozessorsystem MCUSA ergibt sich damit insgesamt eine erhöhte Verfügbarkeit sowie eine erhöhten Sicherheit.

Wenn solche Software-Module auf mehreren Mikroprozessor-Modulen HWSAᵢ verteilt sind, werden höhere Robustheitsforderung und höhere Verfügbarkeit gegenüber Hardware-Ausfällen erfüllt.

Bei einer statischen Allokation solcher Software-Module sowohl mehrfach innerhalb eines Mikroprozessor-Modules HWSA₁ oder HWSA₂ als auch auf mehreren Mikroprozessor-Modulen HWSA₁ und HWSA₂, werden erhöhte Sicherheitsanforderungen gegenüber "Defekten" oder auch "konzeptionellen Fehlern" erfüllt.

So sind die beiden auf dem Mikroprozessor-Modul HWSA₂ allokierten Software-Module "HWSA2-Task X₁₃" und "HWSA2-Task X₂₃" redundant mit im Wesentlichem gleichem Algorithmus ausgeführt, wobei beide Software-Module vom gleichen Programmierer A programmiert sind, jedoch das Software-Modul "HWSA2-Task X₂₃" anders als das Software-Modul "HWSA-Task X₁₃" kompiliert bzw. assembliert ist, wodurch sich auf der Programmcode-Ebene im Wesentlichen eine Identität ergibt, jedoch durch die unterschiedliche Übersetzung systematische Fehler ausgeschlossen werden können.

Desweiteren sind die beiden redundanten Software-Module "HWSA-Task C₃₃" und "HWSA-Task C₂₃" auf die beiden Mikroprozessor-Module HWSA₁ und HWSA₂ verteilt, wobei beide Software-Module ebenso vom gleichen Programmierer A programmiert wurden, jedoch das Software-Modul "HWSA-Task C₂₃" anders als das Software-Modul "HWSA-Task C₃₃" kompiliert bzw. assembliert ist, wodurch sich auf der Programmcode-Ebene im Wesentlichen eine Identität ergibt, jedoch durch die unterschiedliche Übersetzung systematische Fehler ausgeschlossen werden können.

Diese redundanten Software-Module "HWSA-Task X₁₃" und "HWSA-Task X₂₃" bzw. "HWSA-Task C₃₃" und "HWSA-Task C₂₃" verfügen also einen identischen oder nur marginal abgewandelten Algorithmus.

Schließlich sind diversitär redundante Software-Module vorgesehen, die auf dem gleichen Mikroprozessor-Modul HWSA₁ oder HWSA₂ verteilt sind.

Gemäß Figur 4 sind dies die beiden auf dem Mikroprozessor-Modul HWSA₁ allokierten Software-Module "HWSA-Task A₁₂" und "HWSA-Task A₂₂", die von zwei verschiedenen Programmierern A und B programmiert sind. Auch zu den beiden redundanten Software-Modulen "HWSA2-Task X₁₃" und "HWSA2-Task X₂₃" auf dem Mikroprozessor-Modul HWSA₂ existiert auf demselben Mikroprozessor-Modul HWSA₂ ein diversitär redundantes Software-Modul "HWSA-Task X₃₃". Solche Software-Module variieren strukturell sehr stark.

Solche diversitär redundanten Software-Module können auch auf verschiedene Mikroprozessor-Module verteilt werden. So zeigt Figur 4 ein auf dem Mikroprozessor-Modul HWSA₁ allokiertes Software-Modul "HWSA-Task B₁₂", welches von einem Programmierer A programmiert ist und ein hierzu auf dem Mikroprozessor-Modul HWSA₂ allokiertes diversitär redundantes Software-Modul "HWSA-Task B₂₂", welches von einem anderen Programmierer B programmiert ist. Auch zu den beiden auf beide Mikroprozessor-Module HWSA₁ und HWSA₂ verteilten redundanten Software-Modulen "HWSA-Task C₂₃" und "HWSA-Task C₃₃", welche von einem Programmierer A programmiert sind, existiert auf Mikroprozessor-Modul HWSA₁ ein diversitär redundantes Software-Modul "HWSA-Task C₁₃", welches von einem anderen Programmierer B programmiert ist. Solche Software-Module variieren strukturell sehr stark.

Die Anzahl m der diversitär redundanten Software-Module kann größer als die Anzahl n (n<m) der Mikroprozessor-Module HWSAᵢ (i=1, ... n) sein. In einem solchen Fall kann eine Serialisierung von n Software-Modulen auf einem einzigen Mikroprozessor-Modul HWSAᵢ durchgeführt werden. Selbstverständlich kann in diesem Fall, eine genügende Rechenleistung des zugrundeliegenden Mikroprozessor-Moduls vorausgesetzt, eine erhöhte Sicherheit durch die sequentiell gerechneten und schlussendlich hinsichtlich ihrer Ausgangssignale plausibilisierten Software-Module erreicht werden. Jedoch wird in diesem Fall der Einbringung sämtlicher Software-Module die Verfügbarkeit gegenüber Versagen des zugrundeliegenden Mikroprozessor-Moduls nicht gesteigert, wobei es unerheblich ist ob diese Software-Module redundant programmiert oder anders übersetzt sind. Die Verfügbarkeit wird bei diversitär ausgeführter Einlagerung der redundanten Software-Module auf verschiedene Mikroprozessor-Module gesteigert.

Solche diversitär redundanten, dem gleichen Zweck dienenden, Software-Module "HWSA-Task Aᵢⱼ", "HWSA-Task Bᵢⱼ", "HWSA-Task Cᵢⱼ" und "HWSA2-Task Xᵢⱼ", die über einen nach Intention gänzlich anderen Algorithmus verfügen, liefern die Grundlage für eine konzeptionell redundante Berechnung von Ausgangsgrößen bzw. Ergebnissen von Regelfunktionen, was die Absicherung gegenüber konzeptionellen Fehlern gewährleistet.

Die höhere Verfügbarkeit äußert sich in einer Toleranz des Mikroprozessorsystems MCUSA gegenüber dem Versagen eines Mikroprozessor-Moduls HWSAᵢ, da in einem solchen Fall eines detektierten Fehlers oder Ausfalls eines Mikroprozessor-Moduls HWSAᵢ ein anderes Mikroprozessor-Modul HWSAⱼ (i□j) ein entsprechendes Software-Modul ausführen kann.

Eine erhöhte funktionale Sicherheit wird durch die diversitär redundanten Software-Module, welche auf verschiedenen Mikroprozessor-Modulen HWSAᵢ ausgeführt werden, erreicht, wodurch sowohl eine Absicherung auf Hardware-Ebene durch die Eigensicherheit der Mikroprozessor-Module HWSAᵢ als auch eine Absicherung auf Software-Ebene durch die diversitäre Redundanz der Software-Module, also durch deren nicht gleichen Algorithmus gewährleistet wird.

Zurück zu den Software-Modulen "HWSA1-Output-Plausibilization" bzw. "HWSA2-Output-Plausibilization" auf dem Mikroprozessor-Modul HWSA₁ bzw. HWSA₂ nach Figur 4.

Bei der funktional notwendigen Plausibilisierung mittels der Software-Module "HWSA1-Output-Plausibilization" bzw. "HWSA2-Output-Plausibilization" werden spezielle, Regelfunktionen ausführende Software-Module priorisiert und andere zurückgestellt. So ist bspw. im Zusammenhang einer ESP-Regelfunktion und einer ABS-Regelfunktion die Regelfunktion einer ESP-Intervention der einer ABS-Intervention überlegen und wird daher priorisiert und zuerst ausgeführt. Eine solche funktionale Plausibilisierung wird zugunsten des Handlings des Fahrzeugs ausgeführt.

Bei der aus funktionaler Sicherheit notwendigen Plausibilisierung mittels den Software-Modulen "HWSA1-Output-Plausibilization" bzw. "HWSA2-Output-Plausibilization" werden die Ergebnisse der redundant bzw. quasiredundant ausgeführten und, abhängig der statischen Allokierung, auf verschiedene Mikroprozessor-Modulen HWSAᵢ verteilten Software-Module miteinander verglichen bzw. bewertet. So wären die Ergebnisse zweier unabhängiger ESP-Regelfunktionen (also demselben Zweck dienend, nämlich dem Fahrzeug eine "ESP" Funktion zu verleihen) miteinander verglichen. Im Beispiel nach Figur 4 ist etwa das Software-Modul "HWSA-Task Bᵢⱼ" zwei Mal implementiert, nämlich als "HWSA-Task B₁₂ auf dem Mikroprozessor-Modul HWSA₁ und als "HWSA-Task B₂₂" auf dem Mikroprozessor-Modul HWSA₂. Dass die relevanten Eingangsdaten für dieses Software-Modul stimmig sind, ist durch das zuvor ausgeführte Software-Modul "HWSA-Communication" zum Zeitpunkt α (vgl. Figur 4) gewährleistet. Dass die errechneten Ausgangsdaten für einen Vergleich oder eine Gewichtung auf beiden Seiten vorliegen wird durch das Software-Modul "HWSA-Communication" zum Zeitpunkt β gewährleistet. Dass die erreichten Vergleichsergebnisse bzw. Gewichtungsergebnisse auf beiden Mikroprozessor-Modulen HWSA₁ und HWSA₂ vorliegen wird durch das Software-Modul "HWSA-Communication" zum Zeitpunkt γ gewährleistet.

Desweiteren ist das Mikroprozessorsystem MCUSA gemäß Figur 1 für eine dynamischen Prozessierung hinsichtlich der Software-Module ausgebildet.

Wenn bspw. das Software-Modul "HWSA1-Dedicated-Task 3" ausfällt und eine Teilfunktion oder Teilaufgabe deshalb nicht durchführbar ist und diese Teilaufgabe oder Teilfunktion als Programmsegment auch auf dem Software-Modul "HWSA2-Dedicated-Task Z" der Mikroprozessor-Moduls HWSA₂ vorhanden ist, wird dieses Software-Modul "HWSA2-Dedicated-Task Z" der Rolle nach als Backup-Software-Module aktiviert und seine Backup-Routinen durchgeführt.

Eine dynamische Prozessierung bedeutet, dass zustandsabhängig, also bzgl. Hardware oder Software oder Betriebsmodi des Mikroprozessorsystems bestimmte Mikroprozessor-Module HWSAᵢ bzw. bestimmte Software-Module, also bedarfsabhängig durchgeführt werden. Voraussetzung hierfür ist natürlich die statische Allokierung entsprechender Software-Modul, wie dies im Zusammenhang mit Figur 4 beschrieben wurde.

Die Menge der verteilten bzw. diversifizierten Software-Module beinhaltet im Wesentlichen zwei Arten:
a) Solche Software-Module, welche erhöhter funktionaler Sicherheit dienen, also in den Mikroprozessor-Modulen HWSAᵢ ein dauerhafter Ergebnisvergleich durchgeführt wird, und
b) solche Software-Module, welche erhöhter Verfügbarkeit dienen und die idealerweise alternativ ausgeführt bzw. dynamisch gestartet werden können, um im Normalbetriebsmodus Ressourcen und Laufzeit zu sparen, sofern dies vorteilhaft ist.

Zugunsten einer Absicherung der Software bzw. der Algorithmen gegenüber "konzeptionellen Fehlern" werden, wie oben beschrieben, diversitär redundante Software-Module eingebracht.

Diese diversitär redundanten Software-Module brauchen nicht zwangsläufig auf verschiedenen Mikroprozessor-Modulen HWSAᵢ beherbergt werden. Diese Software-Module fallen unter die oben genannte Kategorie a. Auch werden diese diversitär redundanten Software-Module aus einer alternativen Betrachtungsweise heraus redundant entwickelt, von einem anderen Team konzeptioniert und von einem anderen Programmierer realisiert. Die Wahrscheinlichkeit der Wiederholung eines speziellen "Konzeptionellen Fehlers" wird dadurch verringert.

Konzeptionelle Fehler können beispielsweise durch die Ausgestaltung enthaltener Zustandsmaschinen, Zustandstransitionen beim Wechsel von einem Betriebsmodus in den anderen, Fehlerreaktionsverfahren oder ähnliches entstehen. Insbesondere innerhalb von Programmsegmenten, in welchen der oder die Programmierer voneinander abhängige verschiedener momentaner Mess- oder Regelgrößen oder Istzustände sowie Stell- oder Regelwerte oder Sollzustände, also hinsichtlich Kombinatorik oder in einer gewissen Abfolge, also hinsichtlich Sequenz, auf einen Algorithmus abbilden und wie dieser arbeiten, alternative Gleichungen ausführen oder zum Beispiel verschiedene Sicherheitslevel anspringen soll, ergibt sich ein immens komplexer und komplizierter Baum von Permutationen aus der Überlegung einer durchzuführenden mehrstufigen Sequenz über mehrkanaliger Kombinatorik. Diese Umstände begünstigen das Einschleichen von konzeptionellen Fehlern an vermeintlich kleinen, isolierten aber ggf. bei Eintreten fatalen Programmabschnitten, welche aufgrund ihrer wenig ausgedehnten Natur schwerlich vollständig durch Entwicklungstests und/oder Dauerläufe vorab zu identifizieren sind.

Zugunsten der Robustheit des Mikroprozessorsystems MCUSA gegenüber Hardwareausfällen können Software-Module, wie oben beschrieben, auf verschiedene Mikroprozessor-Module HWSAᵢ verteilt bzw. diversifiziert werden. Diese Software-Module fallen unter die oben genannte Kategorie b). Aus Sicherheitsgründen ist daher eine permanente und konkurrente Ausführung inklusive beiderseitigem Vergleich der Ergebnisse dieser Software-Module nicht erforderlich. Auch würde die Robustheit dadurch nicht steigen. Eine bedarfsgerechte Ausführung der diversifizierten Software-Module hingegen würde eine effizientere Nutzung der Laufzeitreserven der Mikroprozessor-Module HWSAᵢ bedeuten. Der Bedarfsfall kann über den Eintritt in eine spezielle Betriebssituation eintreten. Diese besondere Betriebssituation kann ein detektierter Fehler in einem Mikroprozessor-Modul HWSAᵢ sein, auch kann dies ein besonderer Eigenkalibrier- oder Diagnose-Vorgang sein, der die Funktionstüchtigkeit temporär einschränkt oder ein fortwährend vorliegender Unterspannungsfall sein. Es nicht notwendig durch Backup-Software-Module die volle Funktionalität abdecken zu lassen. Die Backup-Software-Module können schlanker ausfallen, kleiner von Code-Größe und Laufzeitkonsum sein. Aus Effizienzgründen kann das, die Backup-Software-Module dynamisch ausführende Mikroprozessor-Modul HWSAᵢ eine Menge ihrer lokalen, nicht essentiellen Software-Module dynamisch abschalten, um die Prozessierung der Backup-Software-Module gewährleisten zu können.

Weiterhin ist mit dem Mikroprozessorsystem MCUSA gemäß Figur 1 eine zeitkontinuierliche Plausibilisierung, also ein ständiger Vergleich der Ergebnisse der verteilten Software-Module vorgesehen.

Zur Beurteilung der für die funktionalen Sicherheit erforderlichen relevanten Eingangsdaten, Ergebnisse und Teilergebnisse sowie Ausgangsdaten der auf dem jeweiligen Mikroprozessor-Modul HWSAᵢ vorliegenden und verteilt gerechneten Software- Modulen werden diese in geeigneter Weise zu verschiedenen Zeitpunkten (α, β und γ gemäß Figur 4) innerhalb des Mikroprozessorsystems MCUSA kommuniziert, wie dies zu den oben erläuterten Zeitpunkten α, β und γ i. Z. mit Figur 4 erläutert wurde. Somit wird ein Mittel zu Verfügung gestellt, welches es gestattet zur Laufzeit sowohl die Funktionstüchtigkeit der verteilten redundanten Mikroprozessor-Module HWSAᵢ innerhalb des Mikroprozessorsystems MCUSA zu kommunizieren als auch die Funktionstüchtigkeit der verteilten Software-Module hinsichtlich des Ausschlusses von durch konzeptionelle Fehler im Algorithmus aufgetretenen Programmschwächen zu belegen.

Zusammenfassend zeichnet sich das erfindungsgemäße Mikroprozessorsystem MCUSA durch folgende Vorteile aus:
- Es zeigt eine erhöhte Robustheit des eingebetteten Gesamtsystems sowohl hinsichtlich Hardware als auch Software:
   - Bei Versagen eines Mikroprozessor-Moduls bleiben andere Mikroprozessor-Module aktiv; Software-Module werden teilweise oder ganz weiter ausgeführt. Ferner werden Backup Routinen in einem anderen Software-Modul auf einem anderen Mikroprozessor-Modul mit der Kontrolle beauftragt,
   - Bei Versagen eines Software-Moduls bleiben andere Software-Module aktiv. Es kann dasselbe Software-Modul aufgrund der Redundanz durchgestartet bzw. neu initialisiert werden. Ferner können Backup Routinen in einem anderen Software-Modul auf demselben oder einem anderen Mikroprozessor-Modul HWSAᵢ gestartet werden.
- Möglichkeit der eineindeutigen Fehlerzuordnung im Fehlerfall zu Hardware oder Software:
   - Bei Versagen eines Mikroprozessor-Moduls HWSAᵢ wird dies eineindeutig angezeigt, bspw. durch ein Register, ein Interrupt, ein Exception oder automatisch ein Signal bzw. Pin setzende Überwachungshardware;
   - Bei Versagen eines Software-Moduls wird dies eineindeutig durch Vergleich bzw. Bewertung gegenüber den Ergebnissen eines anderen Software-Moduls festgestellt; und
   - Die Ursachenerkennung bei Deutung ob Versagen eines Mikroprozessor-Moduls HWSAᵢ oder eines Software-Moduls vorliegt ist eineindeutig möglich, da eigensichere Mikroprozessor-Module HWSAᵢ mit entsprechend eigensicher ausgeführten Infrastrukturmodulen (RAM, FLASH, Busse, etc.) verwendet werden, so dass im Falle eines negativen Ergebnisvergleichs, d. h. dass Ergebnisse redundanter Software-Module sich widersprochen haben, bei gleichzeitiger Sicherstellung der Funktionstüchtigkeit der Mikroprozessor-Module HWSAᵢ die Software-Module als nicht funktionstüchtig eingestuft werden können. Optional kann eine Zwei- oder Mehrfachredundanz der Software-Module angewendet werden, um durch Majoritätsbildung das problembehaftete Software-Modul eineindeutig zu identifizieren und die sichere Funktionsausführung dennoch aufrechtzuerhalten.
- Dynamische Rechenkapazitätsallokierung:
   - Bei Versagen eines Mikroprozessor-Moduls HWSAᵢ werden Backup Routinen in einem anderen Software-Modul auf einem anderen Mikroprozessor-Modul HWSAⱼ mit der Kontrolle beauftragt; und
   - Bei Versagen eines Software-Moduls werden Backup Routinen in einem anderen Software-Modul auf demselben oder einem anderen Mikroprozessor-Modul HWSAᵢ gestartet;
- Flexibles Design des eingebetteten Gesamtsystems aus Mikroprozessor-Modul HWSAᵢ und Software-Modulen:
   - Strukturiertheit und einfache Portierbarkeit der Software-Module über die Mikroprozessor-Module HWSAᵢ hinweg können implizit "by design" erreicht werden.

Das Mikroprozessorsystem MCUSA kann als ASIC in einem einzigen Gehäuse aufgebaut werden. Natürlich ist es auch möglich das Mikroprozessorsystem MCUSA auf zwei oder mehreren ASIC's zu realisieren und dann in einem einzigen IC-Gehäuse zusammenzufassen oder jedes ASIC in ein eigenes IC-Gehäuse zu packen.

Weiterhin ist es möglich, dass die Betriebssysteme der Mikroprozessor-Modul HWSAᵢ gleich oder verschiedenartig sein können, auch dass ein einziges Betriebssystem zum Einsatz kommen kann, welches die Rechenlast statisch, teildynamisch oder volldynamisch auf die diversen Mikroprozessor-Module HWSAi verteilt.

Schließlich können diejenigen auf einer Zeitscheibenbasis arbeitenden Betriebssysteme der Mikroprozessor-Module HWSAᵢ synchronisierbar zueinander ausgebildet werden, d.h. einen definierten phasenstarren Zustand zueinander einnehmen, was z.B. durch die zeitäquidistante Versendung von Zeitmarken durch einen Sender via externer oder Onchip-Bussystemen im Zusammenwirken mit einer vorteilhaften Justage der Zeitscheibe (Loop) auf Seiten des Empfängers erreichbar ist.

## Patentansprüche

1. Mikroprozessorsystem (MCUSA) zur Ausführung von zumindest teilweise sicherheitskritischen Software-Modulen im Rahmen der Steuerung und/oder Regelung von den Software-Modulen zugeordneten Funktionen oder Aufgaben, welches wenigstens ein eigensicheres Mikroprozessor-Modul (HWSAᵢ) mit wenigstens zwei Mikroprozessorkernen (CPUᵢ) umfasst, und
- wenigstens ein weiteres eigensicheres Mikroprozessor-Modul (HWSAᵢ i=1, ... n) mit wenigstens zwei Mikroprozessorkernen (CPU₁, CPU₂; CPU₃, CPU₄) vorgesehen ist, wobei die wenigstens beiden Mikroprozessor-Module (HWSA₁, HWSA₂) über ein Bus-System (B) verbunden sind und
- wenigstens zwei Software-Module vorgesehen sind, welche wenigstens teilweise überlappende Funktionen ausführen, **dadurch gekennzeichnet, dass**
- diese Software-Module mit wenigstens teilweise überlappenden Funktionen auf den wenigstens zwei Mikroprozessor-Modulen (HWSA₁, HWSA₂) verteilt sind, und
- Zur Erkennung von Software- und/oder Hardware-Fehlern Mittel zum Vergleichen und/oder Arbitrieren der mit den Software-Modulen für die identischen Funktionen erzeugten Ergebnisse vorgesehen sind.

2. Mikroprozessorsystem (MCUSA) nach Anspruch 1, **dadurch gekennzeichnet, dass** bei Erkennung eines Fehler behafteten Software-Moduls dessen Funktion zur Fehlerbehebung von einem weiteren Software-Modul ausgeführt wird, welches diese Funktion wenigstens als mit dem Fehler behafteten Software-Modul überlappende Funktion aufweist.

3. Mikroprozessorsystem (MCUSA) nach Anspruch 1 oder 2, **dadurch gekennzeichnet, dass** bei Erkennung eines Fehler behafteten Mikroprozessor-Moduls (HWSA₁, HWSA₂) zur Fehlerbehebung ein weiteres Mikroprozessor-Modul (HWSA₁, HWSA₂) die Durchführung der Funktion des Fehler behafteten Mikroprozessor-Moduls (HWSA₁, HWSA₂) übernimmt, auf welchem das zur Durchführung dieser Funktion erforderliche Software-Modul lokalisiert ist.

4. Mikroprozessorsystem (MCUSA) nach einem der vorhergehenden Ansprüche, **dadurch gekennzeichnet, dass** zur Ausführung einer sicherheitsrelevanten Funktion mehrfach auf einem oder mehreren Mikroprozessor-Modulen (HWSA₁, HWSA₂) verteilte Software-Module mit im Wesentlichen redundanter Software vorgesehen sind.

5. Mikroprozessorsystem (MCUSA) nach einem der vorhergehenden Ansprüche, **dadurch gekennzeichnet, dass** zur Ausführung einer sicherheitsrelevanten Funktion mehrfach auf einem oder mehreren Mikroprozessor-Modulen (HWSA₁, HWSA₂) verteilte Software-Module mit diversitär redundanter Software vorgesehen sind.

6. Mikroprozessorsystem (MCUSA) nach einem der vorhergehenden Ansprüche, **dadurch gekennzeichnet, dass** jedes Mikroprozessor-Modul (HWSA₁, HWSA₂) zur Durchführung von Grundfunktionen Software-Grundmodule, vorzugsweise Kommunikation-Software-Module, Eingangsplausibilisierungs-Software-Module und aufgabenspezifische Software-Module, welche jeweils einmal auf dem Mikroprozessor-Modul lokalisiert sind, aufweist.

7. Mikroprozessorsystem (MCUSA) nach Anspruch 6, **dadurch gekennzeichnet, dass** als Software-Grundmodul ein Ausgangsarbitrierungs-Software-Modul vorgesehen ist, welches eine Arbitrierung und vorzugsweise auch eine Plausibilisierungsprüfung der Ergebnisse der eine sicherheitsrelevante Funktion durchführenden redundanten und/oder diversitär redundanten Software-Module durchführt.

8. Mikroprozessorsystem (MCUSA) nach einem der vorhergehenden Ansprüche, **dadurch gekennzeichnet, dass** wenigstens ein Mikroprozessor-Modul (HWSA₁) hinsichtlich seiner Mikroprozessorkerne (CPU₁, CPU₂) in einem Lock-Stepped-Modus (LSM) arbeitet.

9. Mikroprozessorsystem (MCUSA) nach einem der vorhergehenden Ansprüche, **dadurch gekennzeichnet, dass** wenigstens ein Mikroprozessor-Modul (HWSA₂) hinsichtlich seiner Mikroprozessorkerne (CPU₃, CPU₃) in einem Decoupled-Parallel-Modus (DPM) arbeitet.

10. Mikroprozessorsystem (MCUSA) nach einem der vorhergehenden Ansprüche, **dadurch gekennzeichnet, dass** im Mikroprozessorsystem (MCUSA) wenigstens ein Mikroprozessor (CPU) mit einem Mikroprozessorkern (Single Core Prozessor) vorgesehen ist.

11. Mikroprozessorsystem (MCUSA) nach einem der vorhergehenden Ansprüche, **dadurch gekennzeichnet, dass** die Mikroprozessor-Module (HWSAᵢ, i=1, ... n) wenigstens ein Bus-System mit einer Input/Output-Schnittstelle zur externen Erweiterbarkeit aufweisen.

12. Mikroprozessorsystem (MCUSA) nach einem der vorhergehenden Ansprüche, **dadurch gekennzeichnet, dass** die Mikroprozessor-Module (HWSAᵢ, i=1, .. n) identische Betriebssysteme aufweisen.

13. Mikroprozessorsystem (MCUSA) nach Anspruch 12, **dadurch gekennzeichnet, dass** das Betriebssystem ausgebildet ist, die Rechenlast zur Ausführung einer Funktion auf mehrere Mikroprozessor-Module (HWSAᵢ, i=1, ... n) verteilen zu können.

14. Mikroprozessorsystem (MCUSA) nach einem der vorhergehenden Ansprüche, **dadurch gekennzeichnet, dass** ein Teil der Mikroprozessor-Module (HWSAᵢ, i=1, ... n) mit zeitscheibenbasierten Betriebssystemen ausgerüstet sind, welche synchronisiert werden.

15. Mikroprozessorsystem (MCUSA) nach einem der vorhergehenden Ansprüche, **dadurch gekennzeichnet, dass** die Mikroprozessor-Module (HWSAᵢ, i=1, ... n) wenigstens teilweise als ASIC mit einem gemeinsamen Gehäuse ausgebildet sind.

16. Verwendung des Mikroprozessorsystems (MCUSA) nach einem der vorhergehenden Ansprüche in einem elektronischen Fahrzeugsteuergerät, welches vorzugsweise für die Bremsensteuerung und -regelung vorgesehen ist.

## Claims

1. Microprocessor system (MCUSA) for executing at least partially safety-critical software modules as part of the control and/or regulation of functions or tasks which are associated with the software modules, which microprocessor system comprises at least one inherently safe microprocessor module (HWSAᵢ) having at least two microprocessor cores (CPUᵢ),
and
- at least one further inherently safe microprocessor module (HWSAᵢ, i=1, ... n) having at least two microprocessor cores (CPU₁, CPU₂; CPU₃, CPU₄) is provided, wherein the at least two microprocessor modules (HWSA₁, HWSA₂) are connected by means of a bus system (B), and
- at least two software modules which perform at least partially overlapping functions are provided, **characterized in that**
- these software modules having at least partially overlapping functions are distributed over the at least two microprocessor modules (HWSA₁, HWSA₂), and
- means for comparing and/or arbitrating the results produced with the software modules for the identical functions are provided for the purpose of recognizing software and/or hardware faults.

2. Microprocessor system (MCUSA) according to Claim 1, **characterized in that** when a faulty software module is recognized, the fault is rectified by virtue of the function of said software module being performed by a further software module which has this function at least as a function that overlaps the faulty software module.

3. Microprocessor system (MCUSA) according to Claim 1 or 2, **characterized in that** when a faulty microprocessor module (HWSA₁, HWSA₂) is recognized, the fault is rectified by virtue of a further microprocessor module (HWSA₁, HWSA₂) undertaking the performance of the function of the faulty microprocessor module (HWSA₁, HWSA₂) on which the software module required for performing this function is located.

4. Microprocessor system (MCUSA) according to one of the preceding claims, **characterized in that** in order to perform a safety-relevant function there are software modules provided which have essentially redundant software and which are distributed multiple times over one or more microprocessor modules (HWSA₁, HWSA₂).

5. Microprocessor system (MCUSA) according to one of the preceding claims, **characterized in that** in order to perform a safety-relevant function there are software modules provided which have software with diversified redundancy and which are distributed multiple times over one or more microprocessor modules (HWSA₁, HWSA₂).

6. Microprocessor system (MCUSA) according to one of the preceding claims, **characterized in that** each microprocessor module (HWSA₁, HWSA₂) has, for the purpose of performing basic functions, software basic modules, preferably communication software modules, input plausibilization software modules and task-specific software modules, which are each located on the microprocessor module once.

7. Microprocessor system (MCUSA) according to Claim 6, **characterized in that** the software basic module provided is an output arbitration software module which performs arbitration and preferably also a plausibility check on the results from the redundant and/or diversified-redundant software modules performing a safety-relevant function.

8. Microprocessor system (MCUSA) according to one of the preceding claims, **characterized in that** the microprocessor cores (CPU₁, CPU₂) of at least one microprocessor module (HWSA₁) operate in a lockstepped mode (LSM).

9. Microprocessor system (MCUSA) according to one of the preceding claims, **characterized in that** the microprocessor cores (CPU₃, CPU₄) of at least one microprocessor module (HWSA₂) operate in a decoupled parallel mode (DPM).

10. Microprocessor system (MCUSA) according to one of the preceding claims, **characterized in that** the microprocessor system (MCUSA) contains at least one microprocessor (CPU) having one microprocessor core (single core processor).

11. Microprocessor system (MCUSA) according to one of the preceding claims, **characterized in that** the microprocessor modules (HWSAᵢ, i=1, ... n) have at least one bus system having an input/output interface for external expandability.

12. Microprocessor system (MCUSA) according to one of the preceding claims, **characterized in that** the microprocessor modules (HWSAᵢ, i=1, ... n) have identical operating systems.

13. Microprocessor system (MCUSA) according to Claim 12, **characterized in that** the operating system is designed to be able to distribute the computation load for performing a function over a plurality of microprocessor modules (HWSAᵢ, i=1, ... n).

14. Microprocessor system (MCUSA) according to one of the preceding claims, **characterized in that** some of the microprocessor modules (HWSAᵢ, i=1, ... n) are equipped with time-slice-based operating systems, which are synchronized.

15. Microprocessor system (MCUSA) according to one of the preceding claims, **characterized in that** the microprocessor modules (HWSAᵢ, i=1, ... n) are at least to some extent designed as an ASIC with a common package.

16. Use of the microprocessor system (MCUSA) according to one of the preceding claims in an electronic vehicle controller which is preferably provided for brake control and regulation.

## Revendications

1. Système à microprocesseur (MCUSA) destiné à exécuter des modules logiciels au moins partiellement essentiels à la sécurité dans le cadre de la commande et/ou de la régulation de fonctions ou de tâches affectées aux modules logiciels, qui comprend au moins un module à microprocesseur à sécurité intrinsèque (HWSAᵢ) comportant au moins deux coeurs de microprocesseurs (CPUᵢ), et
- dans lequel il est prévu au moins un module à microprocesseur à sécurité intrinsèque supplémentaire (HWSAᵢ, i=1, ... n) comportant au moins deux coeurs de microprocesseurs (CPU₁, CPU₂ ; CPU₃, CPU₄), dans lequel les au moins deux modules à microprocesseurs (HWSA₁, HWSA₂) sont reliés par l'intermédiaire d'un système de bus (B), et
- il est prévu deux modules logiciels qui exécutent des fonctions se superposant au moins partiellement, **caractérisé en ce que**
- lesdits modules logiciels à fonctions au moins partiellement superposées sont répartis entre les au moins deux modules à microprocesseurs (HWSA₁, HWSA₂), et
- pour identifier des erreurs logicielles et/ou matérielles, il est prévu des moyens destinés à comparer et/ou arbitrer les résultats générés par les modules logiciels pour les fonctions identiques.

2. Système à microprocesseur (MCUSA) selon la revendication 1, **caractérisé en ce que**, lors de l'identification d'un module logiciel affecté d'une erreur, sa fonction est exécutée à des fins de correction d'erreur par un module logiciel supplémentaire qui comporte cette fonction au moins en tant que fonction superposée au module logiciel affecté d'une erreur.

3. Système à microprocesseur (MCUSA) selon la revendication 1 ou 2, **caractérisé en ce que**, lors de l'identification d'un module à microprocesseur affecté d'une erreur (HWSA₁, HWSA₂), un module à microprocesseur supplémentaire (HWSA₁, HWSA₂) reprend l'exécution, à des fins de correction d'erreur, de la fonction du module à microprocesseur affecté d'une erreur (HWSA₁, HWSA₂) sur lequel est localisé le module logiciel nécessaire à l'exécution de cette fonction.

4. Système à microprocesseur (MCUSA) selon l'une quelconque des revendications précédentes, **caractérisé en ce que**, pour l'exécution d'une fonction relevant de la sécurité, il est prévu de multiples modules logiciels répartis sur un ou plusieurs modules à microprocesseurs (HWSA₁, HWSA₂) comportant des logiciels sensiblement redondants.

5. Système à microprocesseur (MCUSA) selon l'une quelconque des revendications précédentes, **caractérisé en ce que**, pour l'exécution d'une fonction relevant de la sécurité, il est prévu de multiples modules logiciels répartis sur un ou plusieurs modules à microprocesseurs (HWSA₁, HWSA₂) comportant des logiciels diversement redondants.

6. Système à microprocesseur (MCUSA) selon l'une quelconque des revendications précédentes, **caractérisé en ce que** chaque module à microprocesseur (HWSA₁, HWSA₂) présente des modules de base logiciels destinés à exécuter des fonctions de base, de préférence des modules logiciels de communication, des modules logiciels destinés à vérifier la plausibilité des entrées et des modules logiciels spécifiques de tâches qui sont chacun localisés sur le module à microprocesseur.

7. Système à microprocesseur (MCUSA) selon la revendication 6, **caractérisé en ce qu'**il est prévu en tant que module de base logiciel un module logiciel d'arbitrage des sorties qui exécute un arbitrage et de préférence également une vérification de plausibilité des résultats des modules logiciels redondants et/ou diversement redondants exécutant une fonction relevant de la sécurité.

8. Système à microprocesseur (MCUSA) selon l'une quelconque des revendications précédentes, **caractérisé en ce qu'**au moins un module à microprocesseur (HWSA₁) fonctionne dans un mode synchrone (LSM, Lock-Stepped-Mode) en ce qui concerne ses coeurs de microprocesseur (CPU₁, CPU₂).

9. Système à microprocesseur (MCUSA) selon l'une quelconque des revendications précédentes, **caractérisé en ce qu'**au moins un module à microprocesseur (HWSA₂) fonctionne dans un mode parallèle découplé (DPM, Decoupled-Parallel Mode) en ce qui concerne ses coeurs de microprocesseur (CPU₃, CPU₄).

10. Système à microprocesseur (MCUSA) selon l'une quelconque des revendications précédentes, **caractérisé en ce qu'**il est prévu dans le système à microprocesseur (MCUSA) au moins un microprocesseur (CPU) ayant un coeur de microprocesseur (Single Core Processor).

11. Système à microprocesseur (MCUSA) selon l'une quelconque des revendications précédentes, **caractérisé en ce que** les modules à microprocesseur (HWSAᵢ, i=1, ... n) comportent au moins un système de bus ayant une interface d'entrée/sortie à des fins d'extensibilité externe.

12. Système à microprocesseur (MCUSA) selon l'une quelconque des revendications précédentes, **caractérisé en ce que** les modules à microprocesseur (HWSAᵢ, i=1, ... n) comportent des systèmes d'exploitation identiques.

13. Système à microprocesseur (MCUSA) selon la revendication 12, **caractérisé en ce que** le système d'exploitation est réalisé de manière à pouvoir répartir la charge de calcul destinée à l'exécution d'une fonction sur de multiples modules à microprocesseur (HWSAᵢ, i=1, ... n).

14. Système à microprocesseur (MCUSA) selon l'une quelconque des revendications précédentes, **caractérisé en ce qu'**une partie des modules à microprocesseur (HWSAᵢ, i=1, ... n) sont équipés de systèmes d'exploitation à base de tranches de temps, qui sont synchronisés.

15. Système à microprocesseur (MCUSA) selon l'une quelconque des revendications précédentes, **caractérisé en ce que** les modules à microprocesseur (HWSAᵢ, i=1, ... n) sont réalisés au moins en partie sous la forme de circuits ASIC à boîtier commun.

16. Utilisation du système à microprocesseur (MCUSA) selon l'une quelconque des revendications précédentes dans un appareil électronique de commande de véhicule qui est de préférence prévu pour la commande et la régulation du freinage.
